Europäisches Patentamt

(19) European Patent Office

Office européen des brevets

(11) Publication number: **0 044 720**
**A2**

## (12) EUROPEAN PATENT APPLICATION

(21) Application number: **81303284.4**

(22) Date of filing: **16.07.81**

(51) Int. Cl.³: **B 01 D 45/16**

(30) Priority: **23.07.80 GB 8024022**

(43) Date of publication of application:
**27.01.82 Bulletin 82/4**

(84) Designated Contracting States:
**AT BE DE FR IT NL SE**

(71) Applicant: **Sundseth, Jarl**
**23 Lennox Gardens**
**London S.W.1.(GB)**

(72) Inventor: **Sundseth, Jarl**
**23 Lennox Gardens**
**London S.W.1.(GB)**

(74) Representative: **Tregear, George Herbert**
**Benjamin et al,**
**LLOYD WISE, TREGEAR & CO Norman House 105-109**
**Strand**
**London WC2R 0AE(GB)**

(54) **Air pre-cleaners.**

(57) An air cleaner comprising a housing, a plurality of tubular dust separator elements arranged in the housing for generally straight-through flow from one end of the housing to the other, the housing defining around the separator elements a dust collecting chamber. Each separator element has means for imparting spin to the air entering it and a circumferential exit of limited angular extent to the dust collecting chamber at a position where the air has substantial circumferential speed. The exits, the direction of spin, and baffles (if any) being arranged to avoid conflicting air flows in the chamber and to ensure that air movement in the chamber outside the exit is in the same direction as air movement within it. Preferably the separator elements impart left and right handed spin to air passing through them, with elements of opposite hand adjacent. In one arrangement the separator elements are arranged in rows with the elements of one row staggered with respect to those of the next, the elements of each row being of the same hand and the elements of adjacent rows of opposite hand, a baffle being disposed between the element of each row.

Fig. 1

Croydon Printing Company Ltd.

Title: Air cleaners

This invention relates to air cleaners such as are commonly used with air filters for internal combustion engines. The purpose of the air cleaner is to remove as much dust as possible from the air flow to the filter. This is particularly important for agricultural operations and for earth-moving equipment, for example. The air cleaner of the invention is, however, not restricted to use with a filter or to use with engines.

For use with a filter, an air cleaner (which in this case acts as pre-cleaner) preferably has the form of a panel for assembly over the inlet of the filter.

The invention makes use of tubular dust separator elements where the dust laden air is set into rotation and the dust removed by centrifugal action. The dust separators are arranged in a housing and are designed for generally straight-through flow from one end of the housing to the other.

Dust separator apparatus using tubular separator elements have been proposed where a proportion of the air flow is taken off to entrain the dust. Such scavenge flow cannot economically be arranged in a panel type air precleaner and the invention does not employ it. In the air cleaner according to the invention the housing defines around the separator elements a dust collecting chamber, and the dust leaves the separator elements through exits therein direct to this chamber.

An important object of the invention is to provide an air cleaner of limited depth (i.e. length end-to-end): in a panel-type pre-cleaner compact construction is an important advantage. The separator elements therefore must be short. It is not possible to scale down long separator elements, since inter alia they would be easily plugged and the construction would become too expensive. With a short separator element, however, the air is rotating rapidly adjacent the dust exit with consequent tendency to turbulence such as would inhibit dust separation.

The invention in one aspect accordingly comprises an air cleaner comprising a housing, a plurality of tubular dust separator elements arranged in the housing for generally straight-through flow from one end of the housing to the other, the housing defining around the separator elements a dust collecting chamber, each separator element having means for imparting spin to the air entering it and a circumferential exit of limited angular extent to the dust collecting chamber, at a position where the air has substantial circumferential speed, the exits, the direction of spin, and baffles (if any) being arranged to avoid conflicting air flows in the chamber and to ensure that air movement in the chamber outside the exit is in the same direction as air movement within it.

It will be understood that there is no air flow through the dust exit to the dust collecting chamber. The dust makes its escape by reason of its kinetic energy. The air rotation within the separator element adjacent the exit tends to entrain a similar rotation in the dust collecting chamber outside the exit. With a single element no problem would arise, but with several, conflicting flows would tend to occur especially if the rotation is all in one direction. This would interfere with the flow in the chamber adjacent each exit, and introduce turbulence that can be reflected to the inside of the separator element and that would inhibit dust removal.

The desired smooth flow in the exit region is most readily attained if the air flow in the separators has alternate left and right hand spin.

Various arrangements of separators are possible. In a preferred arrangement, the separator elements are arranged in rows with the elements of one row staggered with respect to those of the next, the elements of each row being of the same hand and the elements of adjacent rows of opposite hand, a baffle being disposed between the elements of each row.

It is important that the dust exits should not be of excessive angular extent; a 60° sector angle has been found appropriate. The exits can then be arranged to avoid conflicting flows in the dust chamber.

Preferably each dust separator has an annular inlet with vanes providing the spin imparting means, an axial air outlet, and an outward annular step between the inlet and the outlet.
The step feature referred to has two main effects,
(a) it creates a low-pressure area which assists in
removing the centrifugal dust particles from the
airstream, and (b) it helps to reduce the overall
pressure loss through the air passages.   The optimum
width of this step will vary depending upon the speed
of air flowing.

For each separator element the optimum ratio of
length to width at its widest point is of the order of 1
or somewhat under.   This enables the housing to take the
form of a panel of modest depth as well as ensuring the
desired air rotation in the region of the dust exit.

An example of filter with which the air pre-
cleaner can advantageously be combined is illustrated
in my co-pending patent application No.

Two embodiments of the invention will now be
described, by way of example, with reference to the
accompanying drawings, in which:

Figure 1 is an elevation of the outer end of
an air pre-cleaner seen in the direction of the arrow I
in Figure 2;

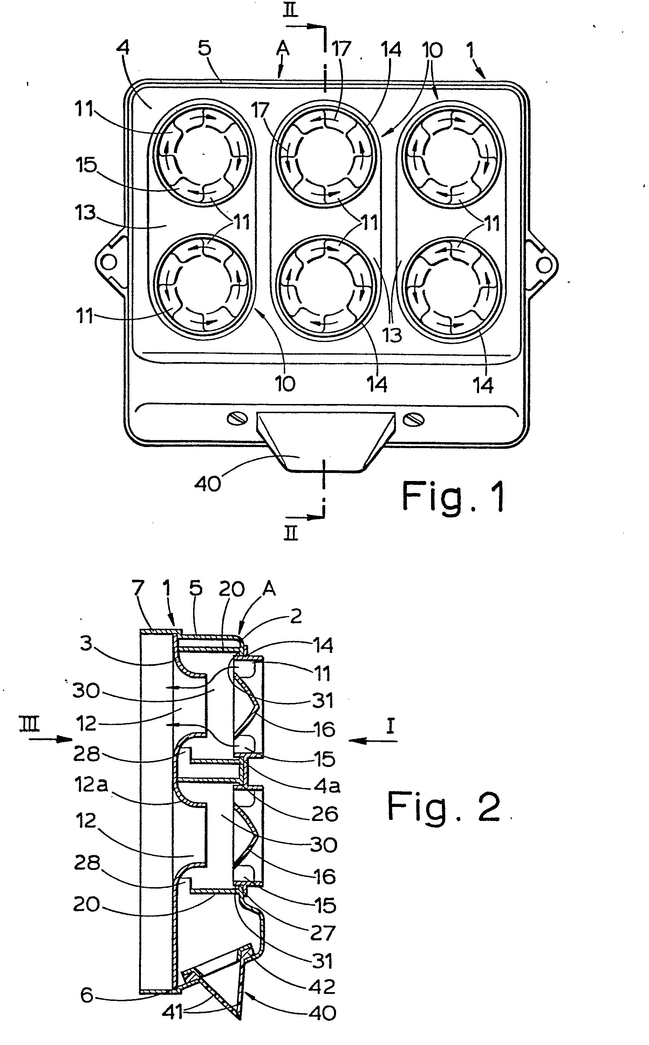

Figure 2 is a section of the air pre-cleaner on
the lines II-II in Figure 1;

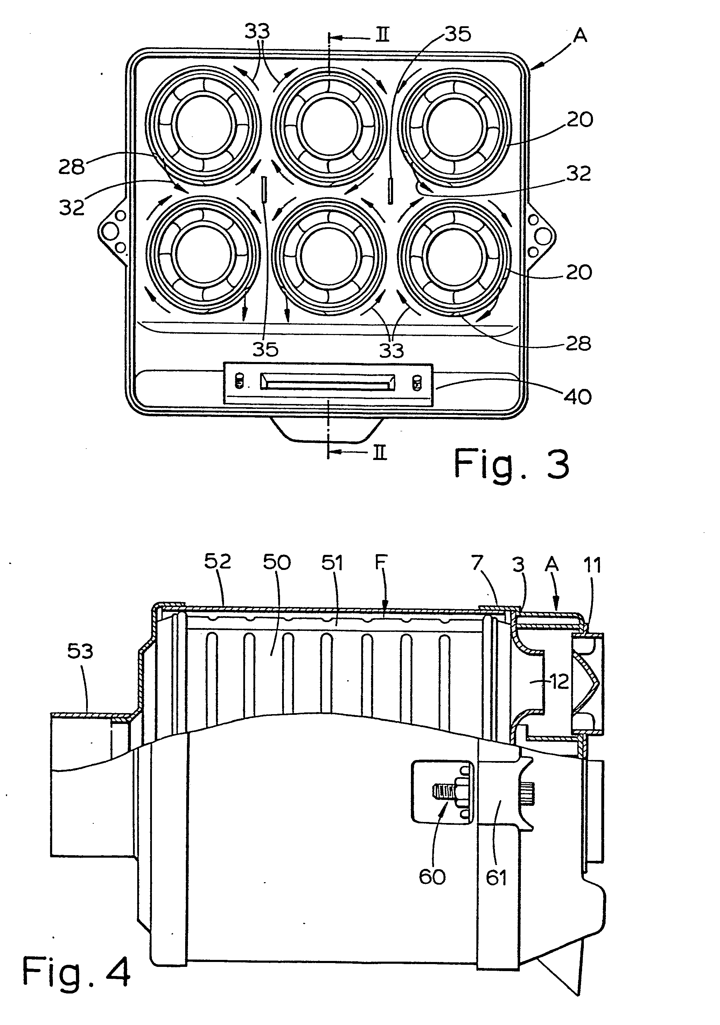

Figure 3 is an elevation of the air pre-cleaner
from the inner end, with the inner housing wall removed;
the direction of this view is shown by the arrow III in
Figure 2;

Figure 4 is a side elevation, with parts shown
cut away and sectioned, of the air pre-cleaner assembled
with a filter;

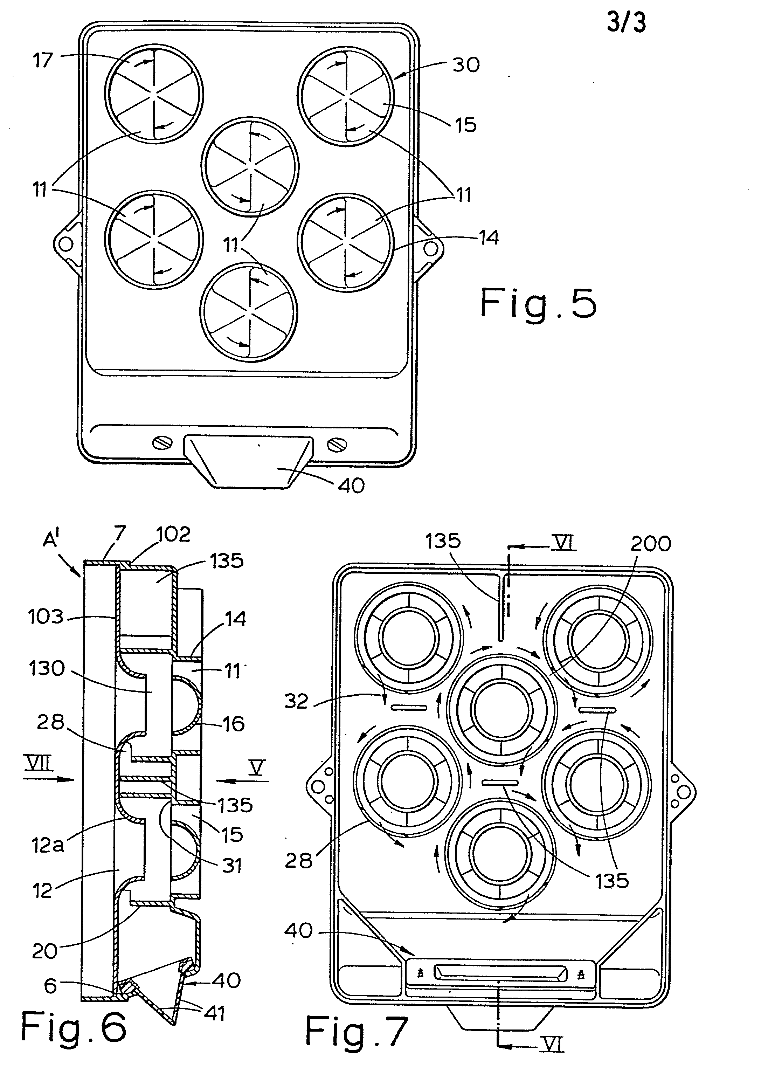

Figures 5, 6 and 7 are views similar to Figures 1,
2 and 3 of a asecond form of air pre-cleaner.

Referring to Figures 1 to 4, the air pre-cleaner
there illustrated is designated generally A.   In Figure 4
it is shown assembled with a filter F.

The air pre-cleaner A comprises a shallow generally
rectangular housing designated generally 1 consisting of an outer member 2 and an inner member 3 both moulded
of plastics material. The housing 1 covers the end of
the enclosure formed by the filter F. The outer member 2
comprises an outer end wall 4 and a peripheral wall 5 of
generally rectangular formation as seen in end elevation.
The inner housing wall 3 is located by and secured to
a step 6 on the peripheral wall 5 of the outer member.
The peripheral wall 5 extends beyond the step 6 to
form a skirt 7.

The end wall 4 of the outer housing member 2 is
apertured at 4a to receive three generally similar inlet
elements each designated generally 10 and defining a
pair of annular inlets 11. The inlet elements 10 are
arranged parallel in three rows (the rows are upright
as shown in Figures 1 and 3). The inlet elements 10
may be plastics mouldings.

The annular inlets 11 are axially aligned
respectively with outlet openings 12 defined by flared
portions 12a in the inner housing wall 3, with the axes
parallel and perpendicular to the general plane of the
end wall 4. The flared portion 12a forms a diffuser
for air leaving the outlet openings 12.

Each inlet element 10 comprises a flat connecting
body 13 with a cylindrical flange 14 at each end.
Vanes 15 extending radially inward from the flange support
a central dome 16. The flange 14 and dome 16 define the
annular inlet 11, and the vanes 15 are angled so as to
impose a spin in the direction of the arrows 17 upon
air entering the inlet. The vanes 15 are so formed as
to cause the spin directions at the inlets 11 of each
inlet element 10 to be contrary. Also the spin directions
at adjacent inlets of adjacent inlet elements are contrary
(see Figure 1).

The outer housing member 2 is formed with deep
tubular flanges 20 aligned with the corresponding inlets 11
and outlets 12. The inner housing member 3 rests against
the ends of the flanges 20. The inlet elements 10 seat
on the end wall 4 of the outer housing member 2, with the flanges 14 on the elements 10 extending within the flanges 20 on the member 2. A circular bead 26 on the end wall 4 within each of the tubular flanges 20 is received within a corresponding annular recess 27 around each flange 14, for snap-action assembly of each inlet element 10 on the end wall 4; the arrangement also forms an air seal.

A portion of each tubular flange 20, about 60° of arc, is cut away at its outer end to form a dust exit 28. The arrangement of the dust exits 28 in the dust chamber are shown in Figure 3. The flanges 20 are bevelled where they define opposite edges of the exit.

It will be seen that the outer diameter of the corresponding inlet 11 is greater than the diameter of the corresponding outlet 12. Each flange 14, flange 20, and outlet 12, form a tubular dust separator designated generally 30 with a peripheral step 31.

The operation of the air pre-cleaner as so far described will now be explained. Air enters the annular inlets 11 of each dust separator 30 and is given a spin in the direction of the arrow 17 by the vanes 15. The rotating air is then drawn inwardly towards the axis of the passage to pass through the outlet 12. The effect of the step 31 is to create a low-pressure area to assist in removing the spinning dust from the airstream and to reduce the overall pressure loss as the air passes through the dust separator 30.

The dust follows the wall of the tubular flange 20 with a spiral motion until it reaches the exit 28 and passes as shown by arrow 32 into the dust chamber formed by the interior of the housing 1. The spinning air within the dust separator 30 in the region of the dust exit 28 tends to entrain the air in the dust chamber to move in a similar direction. If the air flows inside and outside the dust exit 28 correspond, turbulence in that region is minimised. There is no net air movement through the dust exit 28 since there is no scavenge flow. Turbulence at the dust exit has been found to inhibit dust rejection to a surprising extent, and hence the importance of avoiding conflicting air flows in the dust chamber and ensuring that air movement in the chamber outside each exit is in the same direction as air flow within it.

The air flow around the tubular flanges 20 in the dust chamber is shown in Figure 3 by the arrows 33. It will be seen that the flows between the tubular flanges 20 are like meshing gear wheels. The only possibility of conflicting flows occurs in the spaces between four such tubular flanges 20. Baffles 35 are shown to prevent turbulence in these spaces; they are desirable rather than essential.

The lower portion of the peripheral wall 5 of the outer housing member 2 is angled as illustrated and apertured to mount an elastomeric dust valve member 40 having outwardly directed elastically sealing valve lips 41 and a base flange 42 secured to the wall 5 about the aperture. Dust falls to the bottom of the dust chamber formed by the interior of the housing 1 and when there is a sufficient weight of dust overlying the valve member 40 the valve opens to let the dust fall out.

Figure 4 shows the air pre-cleaner A assembled with a filter F. The filter F comprises a deep pleated panel type filter element 50 with elastomeric walls 51 within a casing 52 having an outlet 53 at the end opposite the pre-cleaner. The skirt 7 of the air pre-cleaner fits around the periphery of the filter casing 52. The air pre-cleaner A is removably held to the filter casing 52 by a nut and bolt arrangement 60 on each side of the casing which acts on ledges 61 formed in the peripheral wall 5 of the outer housing member 2. The elastomeric end flanges of the filter element 50 are compressed against the inner housing wall 3 to form a seal which prevents any of the air entering the filter F from leaking around the outside of the cartridge 50.

The air pre-cleaner A is simple to manufacture from relatively few parts. Main parts are the outer
and inner housing walls 2, 3, and the identical inlet
elements 10. Three simple mouldings only are needed.
Although designed for use on the pleated paper filter
shown, it could be used on other filters or by itself.

The arrangement described with reference to the
drawings is only an example of how the invention can
be carried out. Among various alternative constructions,
the outer housing wall 2 can be made of sheet metal.
While the inlet elements 10 described each provide two
inlets, it will be understood that each element could
be made to provide three or more. Three inlets could
be arranged in a line on one element. Four inlets could
be arranged in a square on one element. Alternatively
single-inlet elements are envisaged. Such elements could
in a single generally tubular moulding provide the
stepped flanges 14, 20, the vanes 15 and the dome 16,
and be a snap fit in the outer end wall 4.

The number of inlets 11 can vary depending on
the expected volume of air flow. In one design according
to the invention each inlet can handle about 25 cubic feet
of air per minute. Thus, for a pre-cleaner designed for
use with a small i.c. engine, three inlets might suffice.
For greater flow requirements twelve or more might be
used. While, especially with larger numbers, it is
preferred to arrange the inlets in rows, with all inlets
of each row similar-handed and left- and right-handed
rows alternating, this is not absolutely necessary.
For any inlet arrangement baffles can be provided,
suitably designed to avoid turbulence in the dust space.

Figures 5 to 7 show a second and preferred
embodiment of the invention. For similar parts the
same reference numerals are used as in Figures 1 to 4
and no further description will be needed.

In the second form of air pre-cleaner A' the
six dust separator elements 130 are in staggered rows
so as to take less space. The elements 130 in each row
have their direction of spin of the same hand, and the elements are right-handed, left-handed and right-handed going across the rows as seen in Figure 5.

The arrangement of dust exits 28 is shown in Figure 7, and it will be seen that baffles 135 are disposed between separator elements 130 of the same row, where conflicting flows could otherwise occur. The exits 28 are arranged at the same angle for each of the separators of a row. Air circulation in the dust chamber forms a clearly defined pattern around the elements. At the point 200, for example, air flows between the two elements and across the dust exit 28 of the top right-hand separator which has its trailing edge at that point. The same flow takes place adjacent other separator elements.

The construction of the pre-cleaner A' differs from that of the earlier figures also in being essentially a two-piece construction of outer and inner members 102,103 with the outer member having the domes 16 and vanes 15 formed integrally. The pre-cleaner A' can be designed for any number of dust separator elements 130 in a row.

The air pre-cleaner A' can be used with a filter as shown in Figure 4 for the pre-cleaner A.

It will be noted that the ratio length of air separator to width at its widest point is less than 1 in both pre-cleaners described. Without the arrangements described for minimising turbulence in the dust chamber this ratio would lead to poor dust separation: the strongly rotating air at the dust exit would set up turbulence that would inhibit dust rejection through the dust outlet. While the exit has been shown as subtending 60° at the axis, this angle could be somewhat greater or less between the limits of, say, 45° and 90°. Too large an angle would make it more difficult to control turbulence, while with too small an angle the dust could not escape freely.

It will be seen that the dust separator elements have an inlet 11 extending about 40% of the total
area.       In general, a smaller inlet, with faster
flow, will tend to improve efficiency of dust
separation but too small an inlet will impose resistance
to flow:  the ratio chosen is a compromise.

A circulatory flow can, if desired, be provided
by forming an opening to the dust chamber adjacent
the step 31.   Some air then enters the separator
element at this point, and causes a small air outflow
through the dust exit 28.

Although it is preferred to have contra-rotating
flow in adjacent separator elements, alternative
arrangements may be considered in suitable circumstances
if some loss of efficiency may be tolerated.  If the
separator elements are arranged in horizontal and
vertical rows and all of similar-handed rotation,
baffles of circular outline may be provided in the
centre of every four-element group.

Claims

1.      An air cleaner comprising a housing, a plurality
of tubular dust separator elements arranged in the
housing for generally straight-through flow from one end
of the housing to the other, the housing defining
around the separator elements a dust collecting chamber,
each separator element having means for imparting spin
to the air entering it and a circumferential exit of
limited angular extent to the dust collecting chamber
at a position where the air has substantial circumferential
speed, the exits, the direction of spin, and baffles (if
any) being arranged to avoid conflicting air flows in
the chamber and to ensure that air movement in the
chamber outside the exit is in the same direction as air
movement within it.

2.      An air cleaner as claimed in Claim 1, wherein
the separator elements are such as to impart left and
right handed spin to air passing through them, with
elements of opposite hand adjacent.

3.      An air cleaner as claimed in Claim 2, wherein
the separator elements are arranged in rows with the
elements of one row opposite those of the next, adjacent
elements being of opposite hand.

4.      An air cleaner as claimed in Claim 3, wherein
a baffle is disposed in the space between each pair of
diagonally opposed separator elements.

5.      An air cleaner as claimed in Claim 2, wherein
the separator elements are arranged in rows with the
elements of one row staggered with respect to those
of the next, the elements of each row being of the same
hand and the elements of adjacent rows of opposite hand,
a baffle being disposed between the element of each row.

6.      An air cleaner as claimed in any of Claims 1 to 5, wherein the exits from the separator elements are between 45$^{\circ}$ and 90$^{\circ}$ in angular extent.

7.      An air cleaner as claimed in Claim 6, wherein the exits are of the order of 60$^{\circ}$ angular extent.

8.      An air cleaner as claimed in any of Claims 1 to 7, wherein each dust separator has an annular inlet with vanes providing the spin imparting means, an axial air outlet, and an outward annular step between the inlet and the outlet.

9.      An air cleaner as claimed in any of Claims 1 to 8, wherein for each separator element the ratio of length to width at its widest point is less than 1.

10.      An air cleaner as claimed in any of Claims 1 to 9, wherein the housing comprises inner and outer walls, wherein each separator element has an annular entry wall and a central dome defining an annular inlet and spin-imparting vanes at the inlet connecting the entry wall to the dome, wherein the housing outer wall provides an intermediate annular wall and wherein said inner wall defines said outlet within and spaced from said intermediate wall.

11.      An air cleaner as claimed in Claim 10 as dependent on Claim 8, wherein the intermediate wall is of greater diameter than the inlet wall, the junction of said walls forming said step.

12.      An air cleaner as claimed in Claim 10 or Claim 11, wherein the air outlet is formed as a diffuser.

Fig. 1

Fig. 2

0044720

Fig. 3

Fig. 4

Fig.5

Fig.6

Fig.7